# EUROPÄISCHE PATENTSCHRIFT

(11) **EP 3 087 871 B1**
(45) Veröffentlichungstag und Bekanntmachung des Hinweises auf die Patenterteilung: **14.03.2018**
(21) Anmeldenummer: 16000845.4
(22) Anmeldetag: 14.04.2016
(51) Int. Cl.: A47C 23/00

(54) **KUNSTSTOFFFEDERELEMENT**
PLASTIC SPRING ELEMENT
ÉLEMENT RESSORT EN PLASTIQUE

(30) Priorität: 30.04.2015 DE 202015102184 U
(43) Veröffentlichungstag der Anmeldung: 02.11.2016
(73) Patentinhaber: Hartmann, Siegbert, 32584 Löhne (DE)
(72) Erfinder: Hartmann, Siegbert, 32584 Löhne (DE)
(74) Vertreter: Rolf, Gudrun

(56) Entgegenhaltungen:
- EP-B1- 1 932 452
- WO-A1-01/50923

## Beschreibung

Die Erfindung betrifft ein Kunststofffederelement mit einer oberen und einer unteren Funktionsfläche sowie einem einteilig dazwischen angeformten Federelement aus zwei davon abgehenden, gegenläufig wellenförmig geschwungenen Materialbahnen gemäß dem Oberbegriff des Hauptanspruches.

Es ist ein Einzelfederelement bekannt, EP 1 932 452 B1, welches linsenförmige Querschnitte und Seitenfalten von zwischen oberen und unteren Auflagerflächen angeordneten Teilfederelementen besitzt, wobei in den nach außen gerichteten Seiten maulförmige Kerben als wesentliche Federkomponenten integriert sind.

Das vorbekannte Einzelfederelement weist leider nur eine geringe Flexibilität in seiner Verwendung auf, ebenso wie sich Varianten nur hinsichtlich seiner Größenverhältnisse und seiner Materialauswahl erzeugen lassen. Zudem weist es in Richtung seiner Mittellängsachse keine Luftdurchlässigkeit auf.

Aufgabe der Erfindung ist es, ein Kunststofffederelement zur Verfügung zu stellen, welches einen erweiterten Einsatzzweck und eine variable Verwendung erlaubt sowie eine verbesserte Luftzirkulation ermöglicht.

Die Lösung dieser Aufgabe ergibt sich in Verbindung mit den Merkmalen des Oberbegriffes erfindungsgemäß im Zusammenhang mit den technischen Merkmalen des kennzeichnenden Teils des ersten Schutzanspruches insbesondere dadurch, dass die zueinander gerichteten Innenseiten der wellenförmig gegeneinander geschwungenen Materialbahnen, die die linsenförmigen Teilfederelemente des benannten Standes der Technik bilden, ebenso wie die als Funktionsflächen ausgestalteten Auflagerflächen des Kunststofffederelementes, welche elastisch und flexibel ringförmig ausgebildet sind, insgesamt eine sich zu seiner Mittellängsachse durch das gesamte Bauteil hindurch erstreckende Ausnehmung aufweist.

Diese Ausgestaltung des erfinderischen Kunststofffederelementes erlaubt es, dieses als separates Bauteil zu nutzen, um daraus gemeinsam mit anderen Bauteilen zusammengesetzte Einzelfederelemente und/ oder ganze Unterfederungen von Sitz- oder Liegemöbeln anzufertigen.

Einige vorteilhafte Varianten dieses erfinderischen Kunststofffederelementes ergeben sich mit und in Kombination aus den nachfolgenden Unteransprüchen.

Bei dem erfinderischen Kunststofffederelement grenzt jede Verbindung zwischen den beiden Materialbahnen ein separates Federmodul ab, wobei vorteilhafterweise mindestens ein, zwei oder auch mehrere Federmodule übereinander zwischen den Funktionsflächen angeordnet werden können, sodass damit Kunststofffederelemente unterschiedlicher Höhe zur Verfügung gestellt werden können.

Gemäß einer bevorzugten Ausführungsform der Erfindung ist der Koppelsteg elastisch ausgebildet und weist eine Bewegungsfalte auf, die eine Ausweichbewegung der sich zueinander erstreckenden Materialbahnen nach außen oder auch ein sich Annähern dieser Bereiche, etwa bei einer sehr starken Belastung des Bauteils, ermöglicht.

Entsprechend einer besonders vorteilhaften Ausgestaltung der Erfindung ist die Ausnehmung mit einem Maß ausgestattet, welches größer ist als ¼ des Maßes der Breite oder des Durchmessers der Funktionsfläche 2 des Kunststofffederelementes 1, sodass sich als weiterer Vorteil eine wesentliche Materialeinsparung bei dem erfinderischen Kunststofffederelement einstellt. Eine weitere Materialeinsparung erfolgt dadurch, dass die Funktionsfläche, die elastisch und flexibel ausgebildet sein soll, erheblich dünner ausgebildet werden kann, als als Auflagerfläche, die besonders starr und deswegen erheblich dicker ausgeführt sein müsste.

Ein weiterer Vorteil der Ausnehmung im Kunststofffederelement ist der, dass in diese Ausnehmung hinein unterschiedlich hohe und steife Puffer eingesetzt werden können, sodass jedes einzelne Kunststofffederelement beliebig in seiner Federrate angepasst werden kann.

Bevorzugterweise sind die Funktionsflächen als Klebekontaktflächen ausgebildet und mehrere Kunststofffederelemente in Reihen und Spalten nebeneinander zwischen flächigen Decklagen angeordnet und damit zu großen Federmatten verklebt, die somit eine beliebige Größe aber auch Höhe aufweisen können, etwa wenn mehrere Lagen von Kunststofffederelementen übereinander angeordnet werden, um damit beispielsweise sogenannte Boxspringmatratzen herstellen zu können.

Die Decklagen sind hierzu vorteilhaft aus sehr luftdurchlässigem Woven- oder Nonwovenmaterial oder auch aus einem Netzmaterial gefertigt, sodass innerhalb einer solchen ein- oder mehretagigen Federmatte ein hervorragender Luftaustausch und damit verbunden, eine optimaler Feuchtigkeitsabtransport gewährleistet ist.

Die erfinderischen Kunststofffederelemente lassen sich aus unterschiedlichen Kunststoffen und/ oder unterschiedlich dicken Kunststoffen herstellen, sodass damit insgesamt die unterschiedlichsten Federraten verwirklicht werden können. Solche unterschiedlichen Kunststofffederelemente können an den unterschiedlichsten Positionen einer Federmatte angeordnet sein, wodurch sich Federmatten mit Flächen oder Zonen unterschiedlichster Unterstützungseigenschaften zur Verfügung stellen lassen.

Gemäß einer weiteren vorteilhaften Ausführungsform des Gegenstands der Erfindung ist die Funktionsfläche als Kontaktfläche mit einem Auflagerdeckel ausgestattet, wobei zu einem Kunststofffederelement zwei Auflagerdeckel gehören und damit ein separates Einzelfederelement gebildet werden kann, welches allein oder zu mehreren etwa in oder unter Matratzen oder anderen Unterfederungen von Sitz- oder Liegemöbeln angeordnet werden kann.

Auch in der Ausnehmung eines solchen Einzelfederelementes kann ein Puffer eingesetzt sein, der sich dort ebenfalls nur über eine Teilhöhe oder über die gesamte Höhe des Kunststofffederelementes erstreckt, sodass auch hier eine Federrate erzeugbar ist, die von Beginn einer Verformung an oder erst nach einer freien Teilverformung in beliebigem Maße verstärkt wird.

Nachfolgend sind einige Ausführungsbeispiele der Erfindung anhand von Zeichnungen näher beschrieben. Es zeigen:

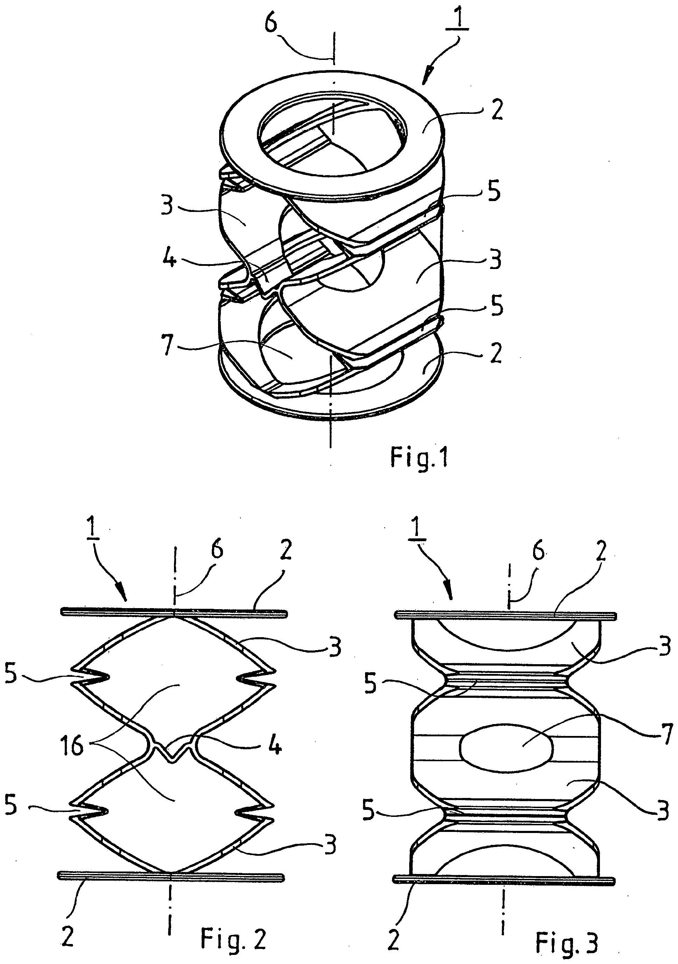

- Fig. 1: eine räumliche Ansicht eines Kunststofffederelementes,
- Fig. 2: eine Seitenansicht des Kunststofffederelementes 1 gemäß Fig. 1,
- Fig. 3: eine Vorderansicht des Kunststoffelementes gemäß der Fig. 1 und 2,
- Fig. 4: eine dreilagige Federmatte aus Kunststofffederelementen gemäß den vorgenannten Fig. 1 - 3,
- Fig. 5: eine räumliche Ansicht eines Einzelfederelementes,
- Fig. 6: eine Seitenansicht eines Einzelfederelementes gemäß Fig. 5,
- Fig. 7: eine Vorderansicht eines Einzelfederelementes gemäß den Fig. 5 und 6,
- Fig. 8: eine Explosionszeichnung eines weiteren Einzelfederelementes mit zusätzlichen Puffern,
- Fig. 9: eine Seitenansicht des Einzelfederelementes gemäß Fig. 8, und
- Fig. 10: ein Kennlinienfeld unterschiedlicher Steifigkeiten des aus unterschiedlichen Kunststoffen gefertigten Kunststofffederelementes gemäß den Fig. 1 - 3.

Das Kunststofffederelement 1 besteht aus einer oberen und einer unteren Funktionsfläche 2 und aus einteilig damit dazwischen angeformten gegenläufig zueinander wellenförmig angeordneten Materialbahnen 3, deren zueinander nach innen gerichtete Innenseiten über einen Koppelsteg 4 miteinander verbunden sind, sodass bei diesen beispielhaft dargestellten Ausführungsformen zwei separate Federmodule 16 gebildet sind und deren nach außen gerichteten Außenseiten maulförmig nach innen gerichtete Falten 5 aufweisen, wobei die Funktionsflächen 2 elastisch und flexibel ringförmig ausgebildet sind und das Kunststofffederelement 1 eine sich zu seiner Mittellängsachse 6 durch das gesamte Bauteil hindurch erstreckende Ausnehmung 7 aufweist.

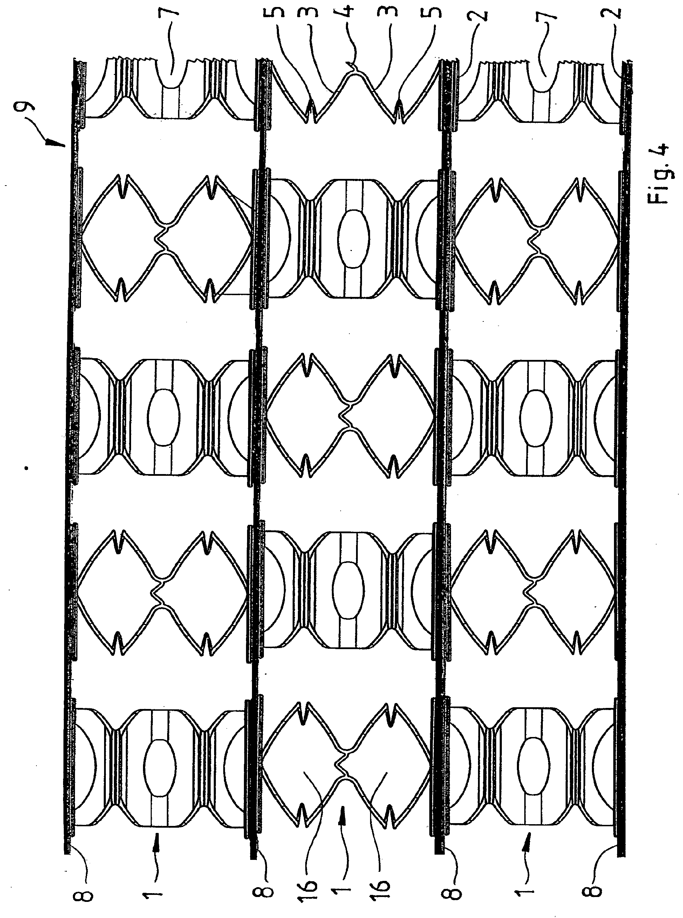

Das Kunststofffederelement 1 ist insgesamt zylindrisch ausgebildet, könnte jedoch auch eine quaderförmige oder eine sonstige räumliche Struktur aufweisen. Durch das zylinderförmige Bauteil wird aus einer Funktionsfläche 2 zusammen mit der Ausnehmung 7 ein Ring, wobei die beiden Ringe 2 eines Kunststofffederelements 1 als Auflagerflächen auf Deckschichten 8 einer Federmatte 9 dienen können, wie sie in Fig. 4 dargestellt ist, wobei durch ein gegenseitiges Verkleben mehrere Lagen von Kunststofffederelementen 1 und darunter und darüber angeordneten Deckschichten 8 Federmatten 9 in beliebigen Höhen-, Längen- und Breitenausdehnung geschaffen werden können.

Die Mittelstege 4 zwischen den nach innen gerichteten Abschnitten der Materialbahnen 3 weisen eine Bewegungsfalte auf, sodass sich bei einer Belastung des Kunststofffederelementes 1 eine Ausgleichsbewegung zwischen den beiden Materialbahnen 3 einstellen kann.

Die nach innen gerichteten Falten 5 erzeugen Federmäuler in den nach außen gerichteten Seiten der Materialbahnen 3, welche einen wesentlichen positiven Einfluss auf die Federqualität des Kunststofffederelementes 1 ausüben.

Durch die Ausnehmung 7 werden zumindest in den nach innen gerichteten Seiten der Materialbahnen 3 seitliche Durchbrechungen erzeugt, die einen Luftaustausch im und um das Kunststofffederelement herum weiter verbessern, ebenso wie die ringförmigen Funktionsflächen 2 einen senkrechten Luftaustausch in Richtung der Mittellängsachse 6 des Kunststofffederelements 1 gewährleisten.

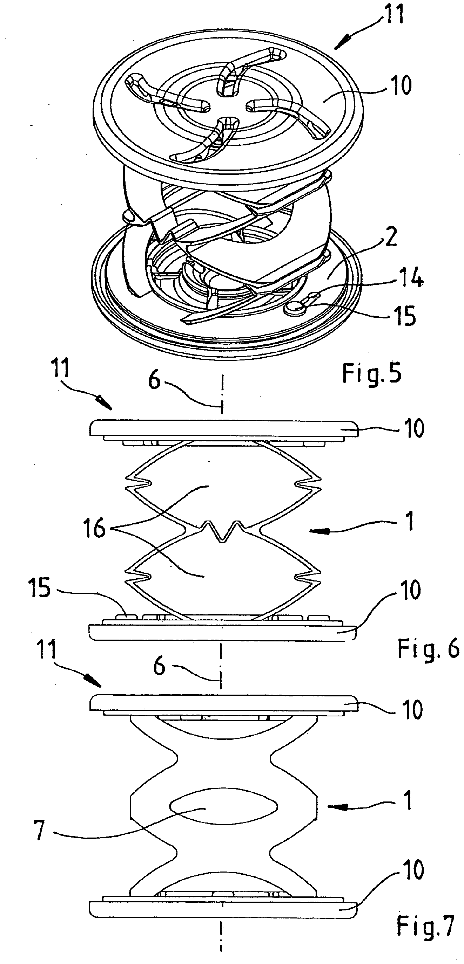

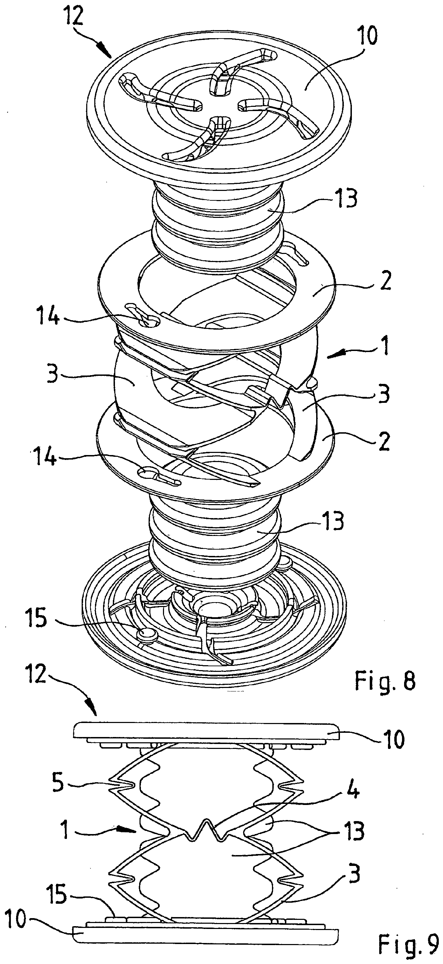

Wie in den Fig. 5 - 9 dargestellt ist, lässt sich aus dem erfinderischen Kunststofffederelement 1 auch das eine oder andere Einzelfederelement 11;12 gestalten, wobei diese zusätzlich mit Auflagerdeckeln 10 versehen sind, die ebenfalls mit der ringförmigen Funktionsfläche 2 des Kunststofffederelements 1 verklebt oder aber über Federrasten 14;15 mechanisch mit diesen verbunden sein können.

Die in dem Kunststofffederelement eingebrachte Ausnehmung 7 ermöglicht es des Weiteren einen Puffer 13 in diese einzusetzen, der ebenfalls aus einem elastischen Kunststoffmaterial gefertigt sein kann und dabei massiv oder hohl ausgebildet sein kann, ebenso wie der hohle Innenraum luftdicht abgeschlossen oder nach außen geöffnet sein kann, um Einfluss auf die gewünschte Federrate nehmen zu können.

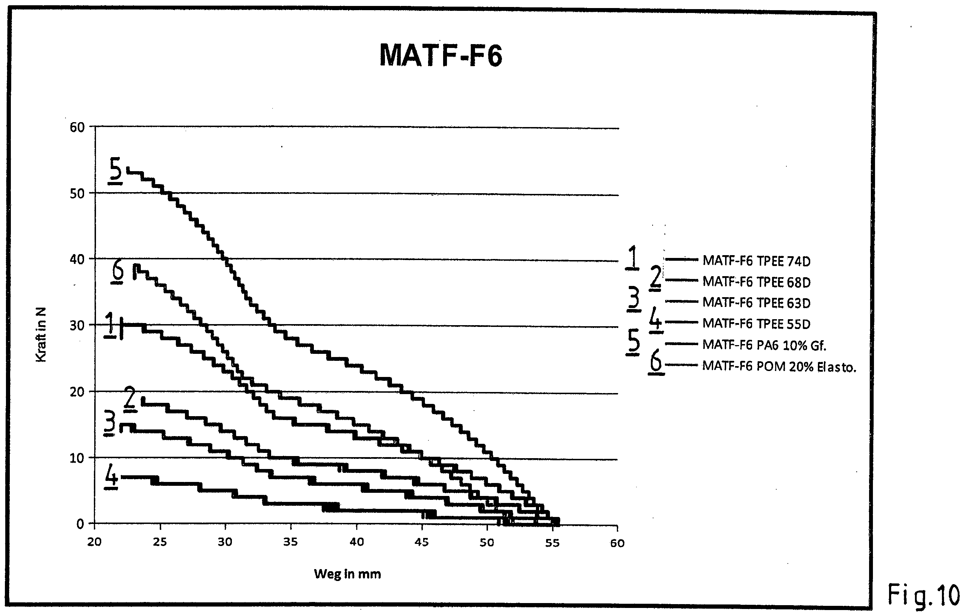

Das Kunststofffederelement 1 kann aus unterschiedlichen Materialien gefertigt sein, beispielsweise TPEE, PA oder POM, wobei die einzelnen Materialien bei identischer Formgebung zu unterschiedlichen Steifigkeiten des Kunststofffederelements 1 oder der daraus gefertigten Einzelfederelemente 11;12 führen, wie dies aus Fig. 10 deutlich hervorgeht und was zur Konstruktion unterschiedlich harter oder Weicher Unterfederungen von Sitz- oder Liegemöbeln genutzt werden kann.

## Patentansprüche

1. Kunststofffederelement mit einer oberen und einer unteren Funktionsfläche (2) sowie mit einem damit einteilig dazwischen angeformten Federelement aus zwei von den Funktionsflächen (2) abgehenden, sich gegenläufig wellenförmig geschwungen zueinander erstreckenden Materialbahnen (3), deren zueinander nach innen gerichteten Innenseiten über einen Koppelsteg (4) miteinander verbunden sind und deren nach außen gerichteten Außenseiten zumindest teilweise mit maulförmig nach innen gerichteten Falten (5) versehen sind, **dadurch gekennzeichnet, dass** eine Funktionsfläche (2) elastisch und flexibel ringförmig ausgebildet ist und das Kunststofffederelement (1) eine sich zu seiner Mittelängsachse (6) durch das gesamte Bauteil hindurch erstreckende Ausnehmung (7) aufweist.

2. Kunststofffederelement nach Anspruch 1, **dadurch gekennzeichnet, dass** jede Verbindung zwischen den Materialbahnen (3) ein Federmodul (16) abgrenzt und mindestens ein, zwei oder mehrere Federmodule (16) übereinander zwischen den Funktionsflächen (2) angeordnet sind.

3. Kunststofffederelement nach Anspruch 1, **dadurch gekennzeichnet, dass** der Koppelsteg (4) elastisch ausgebildet ist und eine Bewegungsfalte aufweist, die eine Ausweichbewegung quer zur Mittellängsachse (6) des Kunststofffederelementes (1) ermöglicht.

4. Kunststofffederelement nach Anspruch 1, **dadurch gekennzeichnet, dass** die Ausnehmung (7) ein Maß aufweist, welches größer ist als ¼ des Maßes der Breite oder des Durchmessers der Funktionsfläche (2) des Kunststofffederelementes (1).

5. Kunststofffederelement nach einem der vorgenannten Ansprüche, **dadurch gekennzeichnet, dass** die Funktionsflächen (2) als Klebekontaktflächen ausgebildet sind und mehrere Kunststofffederelemente (1) in Reihen und Spalten nebeneinander zwischen flächigen Decklagen (8) angeordnet und damit zu Federmatten (9) verklebt sind.

6. Kunststofffederelement nach Anspruch 5, **dadurch gekennzeichnet, dass** mehrere Kunststofffederelemente (1) in mehreren Lagen zwischen Decklagen (8) zu Federmatten (9) vervielfachter Dicke miteinander verklebt sind.

7. Kunststofffederelement nach einem der vorgenannten Ansprüche 5 oder 6, **dadurch gekennzeichnet, dass** die Decklagen (8) aus luftdurchlässigem Woven- oder Nonwovenmaterial oder einem Netzmaterial bestehen.

8. Kunststofffederelement nach einem der vorgenannten Ansprüche, **dadurch gekennzeichnet, dass** verschiedene Kunststoffelemente (1) aus unterschiedlichen Kunststoffen und/ oder aus unterschiedlich dicken Kunststoffabschnitten gefertigt sind und verschiedene Kunststoffelemente unterschiedliche Federraten aufweisen.

9. Kunststofffederelement nach Anspruch 8, **dadurch gekennzeichnet, dass** mehrere Kunststofffederelemente (1) an unterschiedlichen Positionen einer Federmatte (9) angeordnet sind und die Federmatte (9) Flächen oder Zonen unterschiedlicher Unterstützungseigenschaften aufweist.

10. Kunststofffederelement nach einem der vorgenannten Ansprüche, **dadurch gekennzeichnet, dass** die Funktionsfläche (2) als Kontaktfläche mit einem Auflagerdeckel (10) ausgestaltet ist und ein Kunststofffederelement (1) und zwei Auflagerdeckel (10) ein einzelnes Federelement (11;12) bilden.

11. Kunststofffederelement nach Anspruch 10, **dadurch gekennzeichnet, dass** in die Ausnehmung (7) ein Puffer (13) eingesetzt ist, der sich über eine Teilhöhe oder die gesamte Höhe des Kunststofffederelementes (1) erstreckt und eine Federrate von Beginn einer Verformung an oder nach einer freien Teilverformung des Kunststofffederelementes (1) verstärkt.

## Claims

1. Plastic spring element having an upper and a lower functional face (2) and having a spring element, integrally moulded therebetween to said functional faces (2), from two material webs (3) that emanate from the functional faces (2) and extend in a mutually and oppositely undulating curvate manner, the mutually inwardly directed internal sides of said material webs (3) being interconnected by way of a coupling web (4), and the externally directed external sides of said material webs (3) being at least partially provided with mouth-shaped inwardly directed folds (5), **characterized in that** a functional face (2) is configured in an elastic and flexible annular manner, and the plastic spring element (1) has a clearance (7) that extends through the entire component towards the central longitudinal axis (6) of said plastic spring element (1).

2. Plastic spring element according to Claim 1, **characterized in that** each connection between the material webs (3) delimits one spring module (16) and at least one, two, or a plurality of, spring modules (16) are disposed on top of one another between the functional faces (2).

3. Plastic spring element according to Claim 1, **characterized in that** the coupling web (4) is configured so as to be elastic and has a mobility fold which enables a deflected movement transverse to the central longitudinal axis (6) of the plastic spring element (1).

4. Plastic spring element according to Claim 1, **characterized in that** the clearance (7) has a dimension which is larger than 1/4 of the dimension of the width or of the diameter of the functional face (2) of the plastic spring element (1).

5. Plastic spring element according to one of the preceding claims, **characterized in that** the functional faces (2) are configured as adhesive contact faces, and a plurality of plastic spring elements (1) are disposed in rows and columns beside one another between planar cover tiers (8) and are thus adhesively bonded to form spring mats (9).

6. Plastic spring element according to Claim 5, **characterized in that** a plurality of plastic spring elements (1) in a plurality of tiers are adhesively bonded to one another between cover tiers (8) so as to form spring mats (9) of a multiplied thickness.

7. Plastic spring element according to one of preceding Claims 5 or 6, **characterized in that** the cover tiers (8) are composed of an air-permeable woven or non-woven material or of a net material.

8. Plastic spring element according to one of the preceding claims, **characterized in that** dissimilar plastic elements (1) are made from dissimilar plastics and/or from plastic portions of dissimilar thickness, dissimilar plastic elements having dissimilar spring rates.

9. Plastic spring element according to Claim 8, **characterized in that** a plurality of plastic spring elements (1) are disposed at different positions of a spring mat (9), and the spring mat (9) has faces or zones with dissimilar supporting properties.

10. Plastic spring element according to one of the preceding claims, **characterized in that** the functional face (2) is designed as a contact face having a bearing lid (10), one plastic spring element (1) and two bearing lids (10) forming a single spring element (11; 12).

11. Plastic spring element according to Claim 10, **characterized in that** a buffer (13) which extends across a partial height or the entire height of the plastic spring element (1) and amplifies a spring rate from the beginning of a deformation or after a free partial deformation of the plastic spring element (1) is inserted into the clearance (7).

## Revendications

1. Elément ressort en matière plastique avec une face fonctionnelle supérieure et inférieure (2) ainsi qu'avec un élément ressort formé entre celles-ci en une seule pièce avec celles-ci composé de deux bandes de matière (3) partant des faces fonctionnelles (2) et s'étendant l'une par rapport à l'autre sous forme incurvée en forme d'onde de sens contraire, dont les côtés intérieurs dirigés l'un vers l'autre vers l'intérieur sont reliés l'un à l'autre par une nervure de couplage (4) et dont les côtés extérieurs dirigés vers l'extérieur sont au moins partiellement munis de plis en forme de bec (5) dirigés vers l'intérieur, **caractérisé en ce qu'**une face fonctionnelle (2) est réalisée sous forme annulaire élastique et flexible et l'élément ressort en matière plastique (1) présente un évidement (7) s'étendant vers son axe longitudinal central (6) à travers toute la pièce.

2. Elément ressort en matière plastique selon la revendication 1, **caractérisé en ce que** chaque assemblage entre les bandes de matière (2) délimite un module de ressort (16) et au moins un, deux ou plusieurs modules de ressort (16) sont disposés l'un au-dessus de l'autre entre les faces fonctionnelles (2).

3. Elément ressort en matière plastique selon la revendication 1, **caractérisé en ce que** la nervure de couplage (4) est élastique et présente un pli de mobilité, qui permet un mouvement d'extension transversalement à l'axe longitudinal central (6) de l'élément ressort en matière plastique (1).

4. Elément ressort en matière plastique selon la revendication 1, **caractérisé en ce que** l'évidement (7) présente une dimension qui est plus grande que 1/4 de la dimension de la largeur ou du diamètre de la face fonctionnelle (2) de l'élément ressort en matière plastique (1).

5. Elément ressort en matière plastique selon l'une quelconque des revendications précédentes, **caractérisé en ce que** les faces fonctionnelles (2) sont des faces de contact adhésives et plusieurs éléments ressorts en matière plastique (1) sont disposés en rangées et en colonnes entre des couches de couverture plates (8) et sont collées à celles-ci en tapis ressorts (9).

6. Elément ressort en matière plastique selon la revendication 5, **caractérisé en ce que** plusieurs éléments ressorts en matière plastique (1) sont collés les uns aux autres entre des couches de couverture (8) en tapis ressorts (9) d'épaisseur multiple.

7. Elément ressort en matière plastique selon l'une quelconque des revendications précédentes 5 ou 6, **caractérisé en ce que** les couches de couverture (8) se composent de matériau tissé ou non-tissé perméable à l'air ou d'un matériau en filet.

8. Elément ressort en matière plastique selon l'une quelconque des revendications précédentes, **caractérisé en ce que** différents éléments en matière plastique (1) sont fabriqués en matières plastiques différentes et/ou en parties en matière plastique d'épaisseur différente et des éléments ressorts en matière plastique différents présentent des raideurs différentes.

9. Elément ressort en matière plastique selon la revendication 8, **caractérisé en ce que** plusieurs éléments ressorts en matière plastique (1) sont disposés à des positions différentes d'un tapis ressort (9) et le tapis ressort (9) présente des faces ou des zones ayant des propriétés de support différentes.

10. Elément ressort en matière plastique selon l'une quelconque des revendications précédentes, **caractérisé en ce que** la face fonctionnelle (2) en tant que face de contact est dotée d'un couvercle d'appui (10) et un élément ressort en matière plastique (1) et deux couvercles d'appui (10) forment un unique élément ressort (11; 12).

11. Elément ressort en matière plastique selon la revendication 10, **caractérisé en ce qu'**un tampon (13) est introduit dans l'évidement (7), lequel s'étend sur une hauteur partielle ou la hauteur totale de l'élément ressort en matière plastique (1) et renforce une raideur dès le début d'une déformation ou après une déformation partielle libre de l'élément ressort en matière plastique (1).
